# EUROPEAN PATENT SPECIFICATION

(11) **EP 3 951 164 B1**
(45) Date of publication and mention of the grant of the patent: **03.01.2024**
(21) Application number: 19926624.8
(22) Date of filing: 13.08.2019
(51) Int. Cl.: F03D 3/06, F03D 7/06

(54) **VERTICAL AXIS-TYPE WIND TURBINE ASSEMBLY**
WINDTURBINENANORDNUNG MIT VERTIKALER ACHSE
INSTALLATION ÉLECTRIQUE ÉOLIENNE DE TYPE ORTHOGONAL

(30) Priority: 22.04.2019 UA 201904266
(43) Date of publication of application: 09.02.2022
(73) Proprietor: Suhin, Vladimir Stepanovich, Lugansk 91008 (UA); Chernobay, Irina Vladimirovna, Kremennaja, Luganskaja Obl. 92900 (UA); Kalichava, Genadiy Tamazievich, G. Lugansk, 91005 (UA)
(72) Inventor: Suhin, Vladimir Stepanovich, Lugansk 91008 (UA); Chernobay, Irina Vladimirovna, Kremennaja, Luganskaja Obl. 92900 (UA); Kalichava, Genadiy Tamazievich, G. Lugansk, 91005 (UA)
(74) Representative: Eickmeyer, Dietmar
(86) International application number: PCT/UA2019/000106
(87) International publication number: WO 2020/219001

(56) References cited:
- WO-A1-80/00733
- WO-A1-02/053908
- WO-A1-2017/156135
- EA-B1- 013 527
- JP-A- S5 857 082
- JP-A- 2001 065 446
- UA-C2- 87 366
- US-A1- 2018 363 624

## Description

### Field of the invention

The invention relates to a field of an unconventional energetics and may be used in structures of wind turbine assemblies having a vertical axis of rotation to provide an electric energy to electrical networks of domestic and industrial purpose which consume a low- and medium-powered electric energy.

### Prior art

A wind turbine having a vertical axis of rotation is known, the wind turbine comprises a rotor, a wind wheel, a stator, wherein an axis of rotation of the rotor and the wind wheel coincides with the vertical axis of rotation, and the wind wheel comprises at least three crossbeams each fixed with one end to the rotor, a second end has one vertically mounted blade fixed thereto, the blade has a convex-concave aerodynamic profile that is oriented outwardly with its convex portion (away from the axis of rotation of the wind wheel). The blades may be made of aluminum, glass fiber, fiberglass textile laminate, textile laminate, fiber glass, epoxy resin or a combination of at least two mentioned materials [see pat. of Ukraine No. 110606 of the IPC2016 classes F03D 3/00, F03D 7/00, H02K 21/00 published on 10.10.2016 in the Bul. No. 19].

A main drawback of this technical solution is an insufficient efficiency of use of energy of an incoming airflow that is caused by mounting the blades with their convex portion oriented outwardly and with the concave portion oriented inwardly. When such blade comes into a working zone, the airflow will firstly get its concave portion and cause a deceleration of the blade, since the convex portion is still located "in a shadow" of the blade's body. And only when the blade is mounted in parallel to the airflow upon turning of a central axis of the wind wheel, a lifting force will appear therein, thereby causing traction and a forced rotation of the entire wind wheel. In turn, at this step, the opposite blade does not participate in provision of the rotation of the wind wheel at all. It follows from the mentioned information that only one blade provides rotation of the wind wheel, i.e. use of the airflow power is found to be minimum.

This drawback was eliminated in a wind turbine assembly having a vertical axis of rotation, the wind turbine assembly comprises a rotor, a wind wheel, a stator, wherein an axis of rotation of the rotor and the wind wheel coincides with the vertical axis of rotation, and the wind wheel comprises two crossbeams each fixed to the rotor with one end, a second end has one vertically mounted blade fixed thereto, the blade having a doubly convex aerodynamic profile that is oriented inwardly with its larger convexity (towards the axis of rotation of the wind wheel) [see the International application No. WO 2013/065927 of the IPC2006 classes F03D 11/00, F03D 3/06 published on 10.05.2013].

Due to the double convexity of the blade, in spite of the asymmetry of the convexities, there is almost no lifting force therein that could "pull" the blade forward by causing a rotational moment that could turn the wind wheel relative to the vertical axis of its fixation. In this wind turbine assembly, the rotation of the wind wheel is provided due to angular arrangement of the blade (an attack angle), however, the rotation rate of the blades in such wind turbine assembly does not exceed the rate of an incoming airflow, i.e., such assemblies are considered as slow-running ones and used as wind-driven water elevators, and they are not suitable to generate electric energy (due to slow-running).

The closest one in terms of an essence and an achievable effect, taken as a prototype, is a vertical axis-type wind turbine assembly (having a vertical axis of rotation) comprising a mast with an electric generator and a wind wheel in the form of crossbeams extending radially from the mast upon connection of a generator shaft to vertical blades of an aerodynamic profile having a convexity oriented to the axis of rotation of the wind wheel [see the official web site MAC Energy - wind generators: WIND ENERGY 220. 3) Five-bladed vertical wind generators having an aircraft wing profile [Title from the screen]. — Electronic resource. - Access mode: www.vetrogenerator.ru. - Site entry on 25.12.2018, 10 h. 55 min.].

However, although authors has managed to expand the active zone (a sector, wherein a lifting force that causes a moment of the wind wheel rotation occurs in the blade) due to the 180° turn (the convexity being oriented inwardly), the known wind turbine assembly uses the power of the incoming airflow insufficiently. It is associated with the fact that the convex portion of the blade in this structure "operates" incompletely: an airflow breakdown occurs in the rear portion of the blade, and a vacuum is created that decelerates the blade (pulls it back), thereby reducing a torque. As a result of this aerodynamic phenomenon, this wind turbine assembly uses the energy of the incoming airflow insufficiently, thus, in order to further increase an installed capacity of the wind turbine assembly, it is required either to increase a diameter of the wind wheel or a number of the blades thereof. However, the enlarged wind wheel will also loose a portion of the airflow energy for the same reason being an imperfection of the structure of the blades: a limitation of their aerodynamic properties, while a simple increase of the blades will not only complicate the structure of the wind assembly and balancing of the blades, but it also cannot be endless, since each blade will create an air shadow for the next one, thereby almost completely "excluding" the "shadowed" blade from the operation.

The second drawback of the known wind turbine assembly is that a single blade is fixed on each crossbeam, and a dimension (a chord) of the blade defines a size of the active zone (a sector, wherein the blade "operates"). This sector is rather narrow in the known assembly. It is impossible to enlarge it, since it is necessary to enlarge the chord of the blade for this, and, in turn, it is in a functional relationship with the wind wheel diameter: when the wind wheel diameter is small, the rear portion of the wide blade will decelerate, thereby nullifying the pulling forces of the forward portion of the blade, since the rear portion of the wide blade will not be arranged in parallel to the airflow.

The third drawback of the known wind turbine assembly is that the blades thereof are not capable of changing the attack angle. It is understood that if it is necessary to change the capacity of the wind turbine assemble, e.g., the profile or the blade size has changed or there is a specificity of the airflow, it will be much more cost-efficient to change the attack angle of the blade than to change the entire wind wheel. However, the known technical solution lacks this technical possibility.

JP 2001 065446 A discloses a vertical wind turbine assembly according to the pre-amble of claim 1.

### A Problem to be solved

A problem underlying the invention is to further increase the capacity of the wind turbine assembly having a vertical axis of rotation without increasing overall dimensions due to increase of the torque by changing the structure of the blades of the wind wheel.

### Summary of the invention

The posed problem is solved by that in the vertical axis-type wind turbine assembly comprising a mast with an electric generator, and a wind wheel in a form of crossbeams extending radially from the mast in a connection of a shaft of the electric generator with vertical blades that have an aerodynamic profile which is oriented towards an axis of rotation of the wind wheel with its convexity, according to the proposition, each blade of the wind wheel is equipped with an additional blade having the same aerodynamic profile and a chord value, wherein the additional blade has a slat that is typical for subsonic speeds and is mounted relative to the blade such that its convexity is oriented towards the axis of rotation with an offset by 1/3 of the chord and by 2/3 of the chord in a direction of rotation of the wind wheel, and each blade and the additional blade are mounted on the crossbeam such as to allow changing of their attack angle and to fix a selected angle.

Owing to the fact that the additional blade "covers up" and changes the direction of the airflow with its concavity, this airflow is pressed to the convex portion of the blade, thereby resulting in that the operating attack angle (the attack angle without the flow breakdown) of the blade becomes larger by several times than in the single wing (the prototype). Owing to the fact that the slat directs the incoming airflow to the convex portion of the additional blade, the operation efficiency of the latter also increases for the same reason. Therefore, the additional blade with the slat, in combination with the blade, expands the sector of the active operation of the blade without increasing the diameter of the wind wheel, thereby providing increase of the torque and, thus, the installed capacity of the proposed wind turbine assembly. The offset of the additional blade by 1/3 of the chord to the axis of rotation and by 2/3 of the chord towards the rotation of the wind wheel is optimal and is selected experimentally. Any other offset levels, even insignificant, notably reduce the rotation speed of the wind wheel and, thus, the torque. Mounting of the blades such as to allow changing of the attack angle expands technical and functional capabilities of the proposed wind turbine assembly.

### List of figures of the illustrative materials

Further essence of the invention is explained together with the illustrative material that depicts the following:

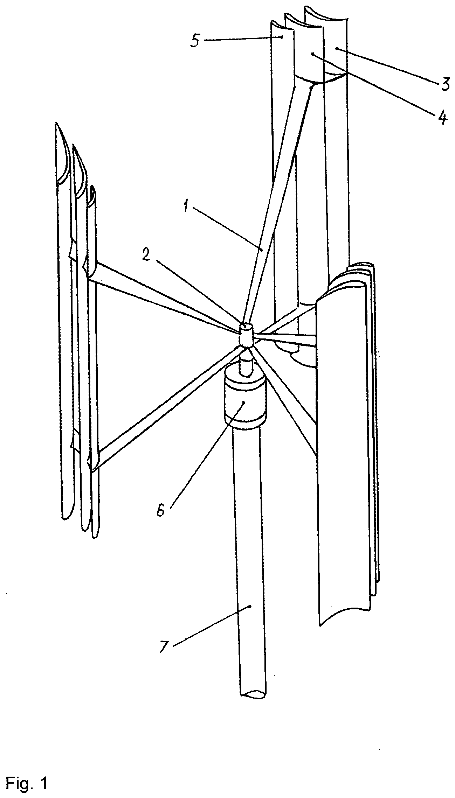

Figure 1 is a visual appearance of the proposed vertical axis-type wind turbine assembly;

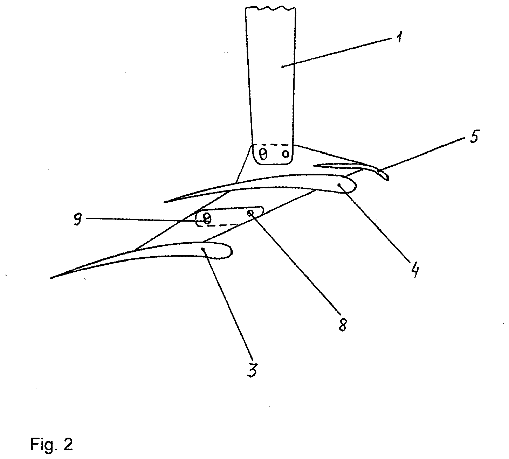

Figure 2 is a fragment of the wind wheel, in particular, a top view of a spatial arrangement of the blades, the additional blade, and the slat.

### Description of the preferred embodiment

The proposed vertical axis-type wind turbine assembly comprises a wind wheel having crossbeams 1, each of them is fixed to the axis of rotation 2 with one end. A second (cantilever) end of the crossbeam 1 has a vertically mounted blade 3 fixed thereto, the blade has a convex-concave aerodynamic profile that is oriented with its convex portion inwardly to the wheel. The blade 3 of the wind wheel is equipped outside with an additional blade 4 of an aerodynamic profile, the blade is offset forwardly towards the rotation of the wind wheel by 2/3 of the chord and by 1/3 of the chord to the axis of rotation 2. In turn, the additional blade 4 is equipped with a slat 5 (having a shape and sizes typical for slats) mounted at a certain distance from a forepart portion of this additional blade 4.

The axis of rotation 2, at the same time, is a shaft of a rotor of an electric generator 6. A stator of the electric generator 6 is immovable and associated with a mast 7 of the wind turbine assembly. The rotor of the electric generator 6 is associated with the wind wheel through the axis of rotation 2 and rotates with it. When the wind wheel rotates, the axis 2 rotates together with the rotor of the electric generator 6, thereby generating the electric energy.

Each blade 3 and the additional blade 4 are mounted on the crossbeam 1 such as to allow changing of their attack angle, for which they can turn relative to axes 8 on grooves 9 with a fixation in a selected position.

The proposed vertical axis-type wind turbine assembly operates in the following fashion.

An incoming airflow acts on the blade 3 of the wind wheel. Due to its aerodynamic profile, the airflow bypasses the convex portion of the blade, thereby causing an occurrence of a lifting force that pulls the blade forward and causing the wind wheel to rotate. In the traditional blade, a depression (a vacuum) appears on a downward portion of its convexity, thereby resulting in that this portion of the blade "does not operate", since the lifting force is not occurred therein. This negative phenomenon is avoided by the additional blade 4 that directs, with its concave portion, the airflow to a tail portion of the blade 3, thereby resulting in occurrence of the lifting force in the latter along the entire length of the convex portion of the blade 3. Since the additional blade is made convex-concave as well, the lifting force also occurs on its convex portion, thereby providing an additional torque for the wind wheel. Therefore, the additional blade 4, with its concave portion, provides the increase of the lifting force in the blade 3, while generating the additional lifting force in its convex portion. The slat 5 protects the additional blade 4 from the airflow breakdown, thereby enabling operation of its convex portion. Besides, the slat 5 directs the airflow to the convex portion of the additional blade 4, thereby providing the occurrence of the additional lifting force therein. The blade 3, the additional blade 4, and the slat 5, by operating together, increase the active (working) zone (sector) and the overall aerodynamic force, thus, the overall capacity of the wind turbine assembly increases without increasing the diameter of the wind wheel and the number of the blades along its diameter.

A pilot sample of the proposed wind turbine assembly has been manufactured and tested. The wind wheel having such (paired) blades rotates twice as fast in comparison with the wind wheel taken as the prototype (dimensions and area of the samples are the same). The active sector of the operation of the blades in the proposed wind turbine assembly became approximately twice as wide. If the blades and the slat are moved closer or away, are offset forward or backward from the sizes found experimentally, the aerodynamic lifting force will be reduced dramatically that notably affects the rotation rate of the wind wheel and, thus, the capacity of the wind turbine assembly.

A significant difference between the claimed technical solution and the ones disclosed previously lies in that the blade of the wind wheel is equipped with the additional blade that is mounted with the offset therefrom in two directions, and the additional blade, in turn, is equipped with the typical slat. Said system of blades which supplement each other in combination provides the expansion of the active operation zone of the blades due to maximum possible use of their aerodynamic profile. This results in that the rotation rate and the capacity of the wind turbine assembly increases without increasing the dimensions of the wind wheel and the number of the blades. None of the known vertical axis-type wind turbine assemblies cannot possess said properties, since they do not comprise the entire set of essential features which are peculiar to the claimed technical solution.

### Technical advantages of the invention

The following may be referred to technical advantages of the claimed technical solution as compared to the prototype:
- increase of the torque of the blade due to absence of the airflow breakdown at much larger attack angles;
- increase of the capacity of the wind turbine assembly due to increase of the overall lifting force of the blades without increasing the dimensions of the assembly and the number of the blades;
- expanding technical possibilities due to the possibility of adjusting the attack angle of the blades and the additional blades;
- reducing vibrations and aerodynamic noise due to the balance of the system of blades.

Economic benefit provided by implementation of the proposed technical solution as compared to use of the prototype is obtained due to versatility of working bodies (all blades have the same aerodynamic profile), as well as due to the fact that it is not necessary to increase the dimensions of the wind turbine assembly or to complicate the structure thereof in order to achieve greater electrical capacity.

## Claims

1. A vertical axis-type wind turbine assembly comprising a mast (7) with an electric generator (6), and a wind wheel in a form of crossbeams (1) extending radially from the mast in a connection of a shaft of the generator with vertical blades that have an aerodynamic profile which is oriented towards an axis of rotation of the wind wheel with its convexity, wherein each blade of the wind wheel is equipped with an additional blade (4) having the same aerodynamic profile and a chord value,
**characterized in that** the additional blade (4) has a slat that is typical for subsonic speeds and is mounted relative to the blade such that its convexity is oriented towards the axis of rotation with an offset of the additional blade (4) relative to the axis of rotation of the wind wheel by 1/3 of the chord and by 2/3 of the chord in a direction of rotation of the wind wheel, and each blade and the additional blade (4) are mounted on the crossbeam (1) such as to allow changing of their attack angle and to fix a selected angle.

## Patentansprüche

1. Windkraftanlage mit vertikaler Achse, umfassend einen Mast (7) mit einem elektrischen Generator (6) und ein Windrad in einer Form von Querbalken (1), die sich radial von dem Mast in einer Verbindung einer Welle des Generators erstrecken, mit vertikalen Blättern, die ein aerodynamisches Profil haben, das mit seiner Konvexität auf eine Rotationsachse des Windrads ausgerichtet ist, wobei jedes Blatt des Windrads mit einem zusätzlichen Blatt (4) mit demselben aerodynamischen Profil und einem Sehnenwert versehen ist,
**dadurch gekennzeichnet, dass** das zusätzliche Blatt (4) einen Vorflügel hat, der für Unterschallgeschwindigkeiten üblich ist und so bezüglich des Blatts montiert ist, dass seine Konvexität mit einem Versatz des zusätzlichen Blatts (4) auf die Rotationsachse ausgerichtet ist, und zwar bezüglich der Rotationsachse des Windrads um 1/3 der Sehne und um 2/3 der Sehne in einer Drehrichtung des Windrads, und jedes Blatt und das zusätzliche Blatt (4) an dem Querbalken (1) montiert sind, so dass eine Änderung ihres Anstellwinkels gestattet ist und ein gewählter Winkel festgelegt wird.

## Revendications

1. Installation électrique éolienne de type orthogonal comprenant un mât (7) avec un générateur électrique (6), et une roue éolienne sous forme de traverses (1) s'étendant radialement par rapport au mât en liaison avec un arbre du générateur avec des pales verticales qui ont un profil aérodynamique qui est orienté vers un axe de rotation de la roue éolienne avec sa convexité, chaque pale de la roue éolienne étant équipée d'une pale supplémentaire (4) ayant le même profil aérodynamique et une valeur de corde,
**caractérisée en ce que** la pale supplémentaire (4) a un volet de bord d'attaque qui est classique pour les vitesses subsoniques et est monté par rapport à la pale de sorte que sa convexité soit orientée vers l'axe de rotation avec un décalage de la pale supplémentaire (4) par rapport à l'axe de rotation de la roue éolienne de 1/3 de la corde et de 2/3 de la corde dans un sens de rotation de la roue éolienne, et **en ce que** chaque pale et la pale supplémentaire (4) sont montées sur la traverse (1) de sorte à permettre la modification de leur angle d'attaque et la fixation d'un angle sélectionné.
